# EUROPEAN PATENT APPLICATION

(11) **EP 4 401 197 A1**
(43) Date of publication of application: **17.07.2024**
(21) Application number: 22942358.7
(22) Date of filing: 29.08.2022
(51) Int. Cl.: H01M 10/615, H05B 3/34, H01M 10/625, H01M 10/6571

(54) **HEATING FILM, BATTERY MODULE, BATTERY AND ELECTRIC DEVICE**

(30) Priority: 18.05.2022 CN 202221184532 U
(71) Applicant: Contemporary Amperex Technology Co., Limited, Ningde City, Fujian 352100 (CN)
(72) Inventor: HAN, Fengsheng, Ningde, Fujian 352100 (CN); WANG, Yong, Ningde, Fujian 352100 (CN)
(74) Representative: Laufhütte, Dieter
(86) International application number: PCT/CN2022/115452
(87) International publication number: WO 2023/221329

(57) **Abstract**

The present application relates to a heating film (30), a battery module, a battery (100) and an electrical apparatus. The heating film (30) includes a first insulating film (31), a second insulating film (32) and a heating element (33), the second insulating film (32) is located on one side of the first insulating film (31) in its thickness direction, and the heating element (33) is arranged between the first insulating film (31) and the second insulating film (32). At least one of the first insulating film (31) and the second insulating film (32) includes a ceramic insulating film, and the heating film (30) is further configured with a mounting part (34) for mounting the heating film (30).

## Description

### CROSS-REFERENCE

The present application is based on Chinese patent application No. 2022211845321, filed on May 18, 2022 and entitled "HEATING FILM, BATTERY MODULE, BATTERY AND ELECTRICAL APPARATUS", which is incorporated into the present application by reference in its entirety.

### TECHNICAL FIELD

The present application relates to the technical field of battery manufacturing, in particular to a heating film, a battery module, a battery, and an electrical apparatus.

### BACKGROUND

Energy saving and emission reduction are the key to the sustainable development of automobile industry, electric vehicles have become an important part of the sustainable development of automotive industry due to their advantages of energy saving and environmental protection. For electric vehicles, battery technology is an important factor related to their development.

In a low temperature environment, when an electric vehicle is started, it needs to wait for a long time to heat up the battery. The traditional approach is to preheat the battery through a heating film. An existing heating film has the problem of low heating efficiency.

### SUMMARY OF THE INVENTION

In view of the above problems, the present application provides a heating film, a battery module, a battery and an electrical apparatus, aiming at improving heating efficiency of the heating film.

In a first aspect, the present application provides a heating film, including a first insulating film, a second insulating film and a heating element, the second insulating film is located on one side of the first insulating film in its thickness direction, and the heating element is disposed between the first insulating film and the second insulating film. At least one of the first insulating film and the second insulating film includes a ceramic insulating film, and the heating film is further configured with a mounting part for mounting the heating film.

In the technical solution of an embodiment of the present application, at least one of the first insulating film and the second insulating film of the heating film includes a ceramic insulating film, and the high temperature resistance of each insulating film is improved. At this time, the heating of the heating film may be accelerated by increasing a heating temperature of the heating element, so that heating efficiency of the heating film is significantly improved. Secondly, the heating film is mounted on a heated body (such as a battery cell) through the mounting part, and the heating film is in contact with the heated body, so that the heat generated by the heating film may be conducted to the heated body to realize the heating of the heated body.

In some embodiments, the ceramic insulating film includes at least one of an aluminum nitride ceramic film, a zinc oxide ceramic film, and a boron nitride ceramic film. At this time, the ceramic insulating film includes at least one of the aluminum nitride ceramic film, the zinc oxide ceramic film, and the boron nitride ceramic film. The ceramic insulating film has high temperature resistance, high thermal conductivity and low thermal expansion system, which can improve the heating efficiency of the heating film from many aspects, and the heating efficiency of the heating film is significantly improved.

In some embodiments, both the first insulating film and the second insulating film are the same ceramic insulating film. When the first insulating film and the second insulating film are the same ceramic insulating film, the first insulating film and the second insulating film may be produced based on the same process, and a production cost of the heating film is reduced.

In some embodiments, one side of the second insulating film facing away from the first insulating film in the thickness direction is a mounting side, the mounting part includes a back gum layer, and the back gum layer is disposed on the mounting side in a covering mode. The back gum layer is used to bond the second insulating film and the heated body, and the second insulating film may be in contact with the heated body in a large area through the back gum layer, which may ensure a heat conduction effect of the heating film and improve the heating efficiency of the heating film.

In some embodiments, the mounting part further includes a mounting hole, and the mounting hole penetrates through the first insulating film and the second insulating film at the same time. At this time, the mounting part includes the mounting hole, and the heating film may be fixedly connected to the heated body through a fastener, which may prevent the heating film from detaching from the heated body due to thermal expansion and contraction, and the connection between the heating film and the heated body is reliable.

In some embodiments, the mounting hole is arranged at an edge position of the heating film. Since the heating element is generally arranged in a middle part of the heating film, the mounting hole is arranged at the edge position of the heating film at this time, so as to avoid damage to the heating element. At the same time, usually the middle position of the heating film corresponds to a middle position of a battery cell or a battery module composed of a plurality of battery cells. If the heating film is fastened to the battery cell or the battery module here, it is prone to causing damage to the battery cell or the battery module.

In some embodiments, at least one of the first insulating film and the second insulating film is configured with a stress relief groove, and the stress relief groove is recessed in the thickness direction. When the heating element generates heat or stops heating, the first insulating film and the second insulating film gradually expand or contract, and the setting of the stress relief groove can release the stress generated during the expansion or contraction of the first insulating film and the second insulating film, so as to avoid damage to the first insulating film and the second insulating film.

In some embodiments, a plurality of stress relief grooves are arranged on the first insulating film and/or the second insulating film, and all the stress relief grooves are arranged at intervals. At this time, the stress generated in the first insulating film and the second insulating film may be released, and structures of the first insulating film and the second insulating film are more stable.

In some embodiments, both the first insulating film and the second insulating film extend in a preset direction, and the preset direction is perpendicular to the thickness direction. At this time, the heating film is strip-shaped, which can cover a long area and realize simultaneous heating of a plurality of battery cells.

In some embodiments, the heating film further includes a wire and a connection terminal, the wire is electrically connected to the heating element, partially extends beyond a range of the first insulating film and the second insulating film, and is electrically connected to the connection terminal. At this time, the connection terminal realizes the connection between the heating element and a power supply component.

In a second aspect, the present application provides a battery module. The battery module includes a frame, a plurality of battery cells disposed in the frame, and the heating film in the above embodiment, and the heating film is mounted on the frame.

In a third aspect, the present application provides a battery, including a battery cell and the heating film in the above embodiment, and the heating film is used to heat the battery cell.

In a fourth aspect, the present application provides an electrical apparatus, including the battery in the above embodiment, and the battery is used to provide electric energy.

The above description is only a summary of the technical solutions of the present application. In order to be able to understand the technical means of the present application more clearly, the technical means can be implemented according to the content of the specification. Furthermore, to make the above and other objectives, features and advantages of the present application more comprehensible, specific implementations of the present application are exemplified below.

### DESCRIPTION OF DRAWINGS

Various other advantages and benefits will become apparent to those ordinarily skilled in the art upon reading the following detailed description of the preferred embodiments. The drawings are for the purpose of illustrating the preferred embodiments only and are not to be considered a limitation to the present application. Also, the same components are denoted by the same reference numerals throughout the drawings. In the drawings:
Fig. 1 is a schematic structural diagram of a vehicle in an embodiment of the present application;
Fig. 2 is an exploded schematic diagram of a battery in an embodiment of the present application;
Fig. 3 is an exploded schematic diagram of a battery cell in an embodiment of the present application;
Fig. 4 is an internal schematic structural diagram of a heating film in an embodiment of the present application;
Fig. 5 is a schematic structural diagram of a heating film in an embodiment of the present application;
Fig. 6 is an enlarged diagram of A in Fig. 5;
Fig. 7 is a schematic diagram of application of a heating film in an embodiment of the present application;
Fig. 8 is an enlarged diagram of B in Fig. 7.

Reference numerals in Detailed Description are as follows:
1000, vehicle; 100, battery; 200, controller; 300, motor; 10, box body; 11, first part; 12, second part; 20, battery cell; 21, end cover; 21a, electrode terminal; 22, shell; 23, cell assembly; 30, heating film; 31, first insulating film; 32, second insulating film; 33, heating element; 34, mounting part; 341, back gum layer; 342, mounting hole; 35, stress relief slot; F, preset direction; 36, wire; 37, connection terminal; 38, fastener; and 40, heated body.

### DETAILED DESCRIPTION

Embodiments of the technical solutions of the present application will be described in detail below in conjunction with the drawings. The following embodiments are only used to more clearly illustrate the technical solutions of the present application, and therefore are only used as examples and cannot be used to limit the protection scope of the present application.

Unless otherwise defined, all technical and scientific terms used herein have the same meaning as commonly understood by those skilled in the art belonging to the technical field of the present application; the terms used herein are intended only for the purpose of describing specific embodiments and are not intended to limit the present application; the terms "including" and "having" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is only an association relationship for describing associated objects, indicating that there may be three relationships, for example A and/or B may represent three situations: A exists alone, both A and B exist, and B exists alone. In addition, the character "/" herein generally means that the associated objects before and after it are in an "or" relationship.

In the description of the embodiments of the present application, the term "a plurality of" refers to two or more (including two), and similarly, "multiple groups" refers to two or more (including two) groups, and "multiple sheets" refers to two or more (including two) sheets.

In the description of the embodiments of the present application, the orientation or position relationship indicated by the technical terms "center", "longitudinal", "transverse", "length", "width", "thickness", "upper," "lower," "front," "back," "left," "right," "vertical," "horizontal," "top," "bottom," "inner," "outer," "clockwise," "counterclockwise," "axial", "radial", "circumferential", etc. are based on the orientation or position relationship shown in the drawings and are intended to facilitate the description of the embodiments of the present application and simplify the description only, rather than indicating or implying that the device or element referred to must have a particular orientation or be constructed and operated in a particular orientation, and therefore are not to be interpreted as limitations on the embodiments of the present application.

In the description of the embodiments of the present application, unless otherwise expressly specified and limited, the technical terms "mount," "join," "connect," "fix," etc. should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in the embodiments of the present application can be understood according to specific situations.

The battery cannot be charged and discharged in low temperature environment. In order to meet the requirements of battery operation at low temperature, it is necessary to heat up the battery. Heating film heating battery is a way with high heating efficiency.

The inventors of the present application have noticed that a traditional heating film mostly uses a polyimide film as the insulating film to achieve electrical insulation. When the heating film is used to heat the battery, if the heating temperature exceeds 110°C, the polyimide film will be carbonized and the insulation and voltage resistance of the entire heating film will be affected. Therefore, the heating temperature generally cannot exceed 110°C, resulting in low heating efficiency.

In order to improve the heating efficiency of the heating film, the inventors of the present application found that the design can improve the temperature resistance of the insulating film. For example, adding temperature-resistant particles (such as ceramic particles) to improve temperature resistance in polyimide materials or using materials with better temperature resistance to prepare insulating films. However, if temperature-resistant particles are added to the polyimide material, the preparation of the insulating film is complicated, the production cost of the heating film is high, and the temperature resistance of the insulating film is not significantly improved.

Based on the above considerations, in order to improve the heating efficiency of the heating film, the inventor designed a heating film after in-depth research. The insulating film includes a ceramic insulating film, and a ceramic material has excellent insulation and high temperature resistance. Ceramics are used to prepare the insulating film of the heating film. The composition of the insulating film is relatively single, the preparation is relatively simple, and the cost of the heating film is low. The temperature resistance of the insulating film is significantly improved, and the heating efficiency of the heating film can be greatly improved.

The heating film disclosed in the embodiments of the present application is used to heat a heated body. The heated body may be a frame containing a plurality of battery cells in a battery module, the heating film is mounted on the frame, and the heating film is mounted on the frame to indirectly heat the battery cells. The battery module usually includes circuit supervision control (CSC), a battery module thermal management system, and the like. The CSC is used to monitor and manage each battery cell in the frame. The battery module thermal management system includes a liquid cooling system for cooling the frame and a heating system for heating the frame (such as the heating film provided in the embodiment of the present application).

A battery with a module may be formed by placing the battery module in a box, and the heating film disclosed in the embodiment of the present application may be applied to the battery with the module.

The heating film disclosed in the embodiment of the present application may also be applied to a cell to pack (CTP). In the CTP, a plurality of battery cells contained in the box do not need to be accommodated in a frame structure, but are directly placed in the box. At this time, the heating film may be directly mounted on the battery cell to directly heat the battery cell.

Certainly, the battery with the module and CTP may also include liquid cooling systems and battery management systems (BMSs) at a battery level. Understandably, the heated body heated by the heating film may also be other components that need to be heated.

An embodiment of the present application provides an electrical apparatus that uses a battery as a power source, and the electrical apparatus may be, but is not limited to, a mobile phone, a tablet, a laptop, an electric toy, an electric tool, a battery vehicle, an electric vehicle, a ship, a spacecraft, and so on. The electric toy may include fixed or mobile electric toys, such as game consoles, electric car toys, electric ship toys, electric airplane toys, and the like. The spacecraft may include airplanes, rockets, space shuttles, spaceships, and the like.

For the convenience of description, the following embodiments are illustrated with an example in which the electrical apparatus of an embodiment of the present application is a vehicle 1000.

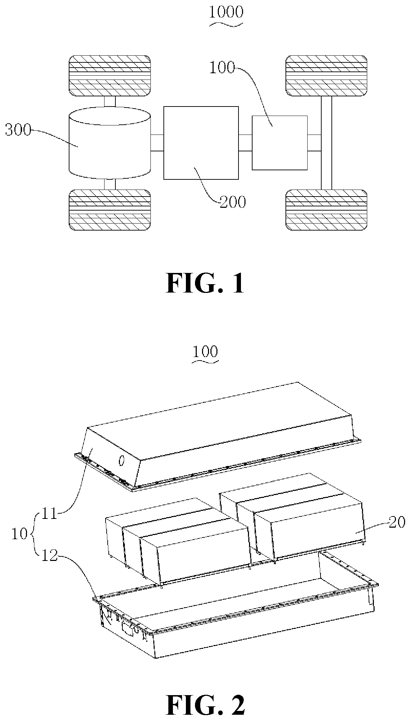

Please refer to Fig. 1, Fig. 1 is a schematic structural diagram of a vehicle 1000 provided by some embodiments of the present application. The vehicle 1000 may be a fuel vehicle, a gas vehicle, or a new energy vehicle, and the new energy vehicle may be an all-electric vehicle, a hybrid vehicle, or an extended-range electric vehicle. The interior of the vehicle 1000 is provided with a battery 100, and the battery 100 may be disposed at a bottom or head or tail of the vehicle 1000. The battery 100 may be used to supply power to the vehicle 1000. For example, the battery 100 may be used an operating power source of the vehicle 1000. The vehicle 1000 may further include a controller 200 and a motor 300. The controller 200 is used to control the battery 100 to supply power to the motor 300, for example, used for meeting the operating power demand when the vehicle 1000 is starting, navigating and driving.

In some embodiments of the present application, the battery 100 not only may serve as an operating power source of the vehicle 1000, but also may serve as a driving power source of the vehicle 1000, thus replacing or partially replacing fuel or natural gas to provide driving power for the vehicle 1000.

Please refer to Fig. 2, Fig. 2 is an exploded diagram of a battery 100 provided by some embodiments of the present application. The battery 100 includes a box body 10 and a battery cell 20, and the battery cell 20 is accommodated within the box body 10. Here, the box body 10 is used to provide an accommodating space for the battery cell 20, and the box body 10 may be of various structures. In some embodiments, the box body 10 may include a first part 11 and a second part 12. The first part 11 and the second part 12 are covered by each other, and the first part 11 and the second part 12 together define an accommodating space for accommodating the battery cell 20. The second part 12 may be a hollow structure with one end open, the first part 11 may be a platelike structure, and the first part 11 covers an opening side of the second part 12, so that the first part 11 and the second part 12 together define the accommodating space. It is also possible that each of the first part 11 and the second part 12 is a hollow structure with one side open, and the opening side of the first part 11 covers the opening side of the second part 12. Certainly, the box body 10 formed by the first part 11 and the second part 12 may be in various shapes, such as a cylinder or a cuboid.

In the battery 100, there may be a plurality of battery cells 20, and the plurality of battery cells 20 may be connected in series or parallel or in a parallel-series connection, wherein the mixed connection means that the plurality of battery cells 20 are connected in both series and parallel. The plurality of battery cells 20 may be directly connected in series or in parallel or mixed together, and then the whole formed by the plurality of battery cells 20 is accommodated in the box body 10. Certainly, the battery 100 may also be that the plurality of battery cells 20 are connected in series or parallel or in a parallel-series connection first to form a battery module, then the plurality of battery modules are connected in series or parallel or in a parallel-series connection to form a whole, and the whole is accommodated in the box body 10. The battery 100 may further include other structures, for example, the battery 100 may further include a bus component for electrically connecting the plurality of battery cells 20.

Each battery cell 20 may be a secondary battery or a primary battery; or may be a lithium-sulfur battery, a sodium-ion battery or a magnesium-ion battery, but is not limited thereto. The battery cell 20 may be in the shape of a cylinder, a flat body, a cuboid or others.

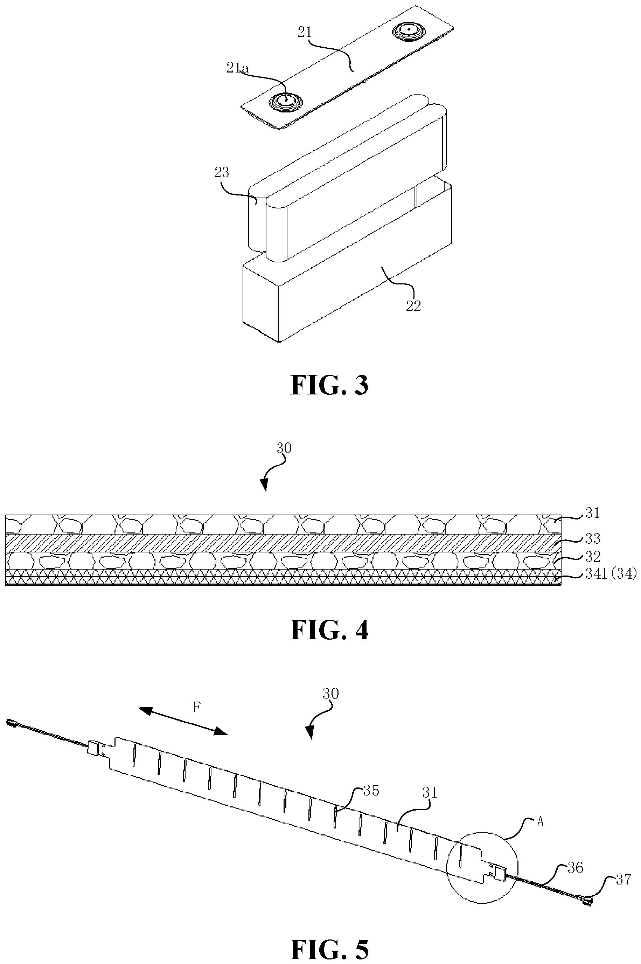

Please refer to Fig. 3, Fig. 3 is an exploded schematic structural diagram of a battery cell 20 provided by some embodiments of the present application. The battery cell 20 refers to a smallest unit that forms the battery. As shown in Fig. 3, the battery cell 20 includes an end cover 21, a shell 22, a cell assembly 23 and other functional components.

The end cover 21 refers to a component that covers the opening of the shell 22 to isolate the internal environment of the battery cell 20 from the external environment. Without limitation, a shape of the end cover 21 may be adapted to a shape of the shell 22 to fit the shell 22. Optionally, the end cover 21 may be made of a material with a certain hardness and strength (such as aluminum alloy), so that the end cover 21 is not easily deformed when being squeezed and collided, so that the battery cell 20 can have higher structural strength, and the safety performance may also be improved. Functional components such as electrode terminals 21a may be disposed on the end cover 21. The electrode terminal 21a may be used for electrical connection with the cell assembly 23 for outputting or inputting electric energy of the battery cell 20. In some embodiments, the end cover 21 may further be provided with a pressure relief mechanism used to relieve pressure inside the battery cell 20 when internal pressure or temperature of the battery cell 20 reaches a threshold. The end cover 21 may be made of various materials, such as copper, iron, aluminum, stainless steel, aluminum alloy, and plastic, which is not particularly limited in the embodiments of the present application. In some embodiments, an insulator may further be disposed on an inner side of the end cover 21, and the insulator may be used to isolate an electrical connection component in the shell 22 from the end cover 21 to reduce the risk of short circuit. Exemplarily, the insulator may be plastic, rubber or the like.

The shell 22 is an assembly used to cooperate with the end cover 21 to form the internal environment of the battery cell 20, wherein the formed internal environment may be used to accommodate the cell assembly 23, electrolyte solution and other components. The shell 22 and the end cover 21 may be independent components, and an opening may be disposed on the shell 22, and the internal environment of the battery cell 20 may be formed by making the end cover 21 cover the opening at the opening. Without limitation, the end cover 21 and the shell 22 may also be integrated. Specifically, the end cover 21 and the shell 22 may form a common connection surface before other components are inserted into the shell. When the interior of the shell 22 needs to be packaged, the end cover 21 is made cover the shell 22. The shell 22 may be in various shapes and sizes, such as cuboid, cylinder and hexagonal prism. Specifically, the shape of the shell 22 may be determined according to the specific shape and size of the cell assembly 23. The case 22 may be made of various materials, such as copper, iron, aluminum, stainless steel, aluminum alloy, and plastic, which is not particularly limited in the examples of the present application.

The cell assembly 23 is a component in which an electrochemical reaction occurs in the battery cell 20. One or more cell assemblies 23 may be contained in the shell 22. The cell assembly 23 is mainly formed by winding or stacking a positive electrode sheet and a negative electrode sheet, and usually a separator is disposed between the positive electrode sheet and the negative electrode sheet. The part of the positive electrode sheet and the negative electrode sheet with an active material constitutes a main body of the cell assembly, and the parts of the positive electrode sheet and the negative electrode sheet without the active material respectively constitute tabs. A positive pole tab and a negative pole tab may be located at one end of the main body together or at two ends of the main body respectively. During a charge and discharge process of the battery, a positive active material and a negative active material react with the electrolyte solution, and the tabs are connected to the electrode terminal to form a current loop.

According to some embodiments of the present application, please refer to Fig. 4, the present application provides a heating film 30, including a first insulating film 31, a second insulating film 32 and a heating element 33, the second insulating film 32 is located on one side of the first insulating film 31 in its thickness direction, and the heating element 33 is disposed between the first insulating film 31 and the second insulating film 32. At least one of the first insulating film 31 and the second insulating film 32 includes a ceramic insulating film. The heating film 30 is further configured with a mounting part 34 for mounting the heating film 30.

The heating element 33 is disposed between the first insulating film 31 and the second insulating film 32, and is electrically isolated from the outside through the first insulating film 31 and the second insulating film 32. The heating element 33 is a component capable of generating heat, and its structure may be a heating wire, a heating plate, a heating plate, a heating rod, a heating sheet, etc., and its specific type may be a resistive heating element 33, an infrared heating element 33, an electromagnetic heating element 33, etc. The specific structure of the heating element 33 is not limited here, as long as it can provide heat.

The manner in which the heating element 33 is disposed between the first insulating film 31 and the second insulating film 32 may be, but is not limited to: the heating element 33 is deposited on the first insulating film 31 or the second insulating film 32, the heating element 33 is sandwiched between the first insulating film 31 and the second insulating film 32, a part of the heating element 33 is embedded in the first insulating film 31 and a part thereof is embedded in the second insulating film 32, and the heating element 33 is embedded in one sides of the first insulating film 31 or the second insulating film 32 facing each other. That is to say, the heating element 33 may be disposed between the first insulating film 31 and the second insulating film 32 by, but not limited to, depositing, embedding, sandwiching and the like.

Both the first insulating film 31 and the second insulating film 32 may be fixed by means of adhesion, fastening connection, snap-fit, etc., so that the heating film 30 forms a whole. The heating element 33 is in contact with both the first insulating film 31 and the second insulating film 32. As for whether it is fixedly connected with the first insulating film 31 and the second insulating film 32 by a fastener 38 (such as a rivet, and a screw), etc., it is not limited here, as long as a position of the heating element 33 may be guaranteed to be stable.

Ceramic insulating film refers to a film-like structure made of ceramic materials, which has good insulation and high temperature resistance. The ceramic insulating film may be prepared based on a tape casting technology, a vacuum thermal evaporation technology, a direct-current sputtering technology, a radio frequency sputtering technology, a molecular beam epitaxy technology, a spray pyrolysis technology, a chemical vapor deposition technology, a metal organic vapor deposition technology, etc. The specific preparation method will not be described in detail here.

At least one of the first insulating film 31 and the second insulating film 32 includes a ceramic insulating film, including the following cases: both are ceramic insulating films, one of the two is a ceramic insulating film, and at least one of the two is a composite film, and the composite film includes the ceramic insulating film and other insulating film layers (such as polyimide films doped with ceramic particles).

The mounting part 34 mounts the heating film 30 on the heated body by snap-fit, screwing, bonding, etc., and the specific form is not limited.

The above heating film 30, as at least one of the first insulating film 31 and the second insulating film 32 includes the ceramic insulating film, the high temperature resistance of each insulating film is improved. At this time, the heating of the heating film 30 may be accelerated by increasing a heating temperature of the heating element 33, so that heating efficiency of the heating film 30 is significantly improved. Secondly, at this time, the heating film 30 is mounted on a heated body (such as a battery cell 20) through the mounting part 34, and the heating film 30 is in contact with the heated body, so that the heat generated by the heating film 30 may be conducted to the heated body to realize the heating of the heated body.

In some embodiments, the ceramic insulating film includes at least one of an aluminum nitride ceramic film, a zinc oxide ceramic film, and a boron nitride ceramic film.

An aluminum nitride ceramic film, a zinc oxide ceramic film, and a boron nitride ceramic film have relatively high melting points (about 1000°C), much higher than a melting point of a polyimide film (about 334°C), which greatly improves the temperature resistance of the heating film 30.

The aluminum nitride ceramic film, the zinc oxide ceramic film, and the boron nitride ceramic film have good thermal conductivity (the three are 4.0 W/m·K, 3.2 W/m·K, and 7.51 W/m·K respectively), which are much higher than the thermal conductivity of the polyimide film (0.1-0.5 W/m·K). The higher the thermal conductivity, the higher the efficiency of heat generated by the heating element 33 being transmitted to the battery cell 20, the higher the heat utilization rate of the heating film 30, and the higher the heating efficiency.

The aluminum nitride ceramic film, the zinc oxide ceramic film, and the boron nitride ceramic film also have low thermal expansion coefficients (the three are 4.0×10⁻⁶K, 3.2×10⁻⁶K, and 7.51×10⁻⁶K), which are far lower than a thermal expansion coefficient of the polyimide film (20-30 X10⁻⁶K). The smaller the thermal expansion coefficients, the smaller the thermal deformation of the heating film 30, and the better contact with the battery cell 20, which helps to improve the heating efficiency of the heating film 30.

The ceramic insulating film may be the aluminum nitride ceramic film, the zinc oxide ceramic film or the boron nitride ceramic film, or the composite film formed of at least two of the aluminum nitride ceramic film, the zinc oxide ceramic film or the boron nitride ceramic film, which is not specifically limited.

At this time, the ceramic insulating film includes at least one of the aluminum nitride ceramic film, the zinc oxide ceramic film and the boron nitride ceramic film. The ceramic insulating film has high temperature resistance, high thermal conductivity, and low thermal expansion system, which can improve the heating efficiency of the heating film 30 in many ways, and the heating efficiency of the heating film 30 is significantly improved.

In some embodiments, the first insulating film 31 and the second insulating film 32 both are the same ceramic insulating film.

Specifically, it is possible that both the first insulating film 31 and the second insulating film 32 are aluminum nitride ceramic films, or both the first insulating film 31 and the second insulating film 32 are zinc oxide ceramic films, or both the first insulating film 31 and the second insulating film 32 are boron nitride ceramic films, or the first insulating film 31 and the second insulating film 32 are the same composite film composed of at least two of the aluminum nitride ceramic film, the zinc oxide ceramic film or the boron nitride ceramic film. Certainly, the ceramic insulating film may also be other materials such as an alumina ceramic film, an aluminum nitride ceramic film, a silicon oxide ceramic film, and the like.

When the first insulating film 31 and the second insulating film 32 are the same ceramic insulating film, the first insulating film 31 and the second insulating film 32 may be produced based on the same process, and the production cost of the heating film 30 is reduced.

Certainly, in some embodiments, the first insulating film 31 and the second insulating film 32 may be different ceramic insulating films.

In some embodiments, please refer to Fig. 4, one side of the second insulating film 32 facing away from the first insulating film 31 in the thickness direction is a mounting side, the mounting part 34 includes a back gum layer 341, and the back gum layer 341 is disposed on the mounting side in a covering mode.

The back gum layer 341 refers to a structure capable of bonding the second insulating film 32 and the heated body, and is formed of an adhesive material. The adhesive material may be a polyvinyl alcohol adhesive material, an acrylic adhesive material, etc. There are various types of adhesive materials, and commercially available products may be directly used, which are not specifically limited in the present application.

The application method of the back gum layer 341 may be coated with the adhesive material on the mounting side and covered with a release film, and the covered release film is torn off and pasted on the heated body during use. The application method of the back gum layer 341 may also be to directly adopt commercially available double-sided tape, tear off one side of the double-sided tape and stick it on the mounting side, and tear off the other side of the release film when the heating film 30 is mounted and stick it on the heated body.

At this time, the back gum layer 341 is used to bond the second insulating film 32 and the heated body, and the second insulating film 32 may be in contact with the heated body in a large area through the back gum layer 341, which may ensure a heat conduction effect of the heating film 30 and improve the heating efficiency of the heating film 30.

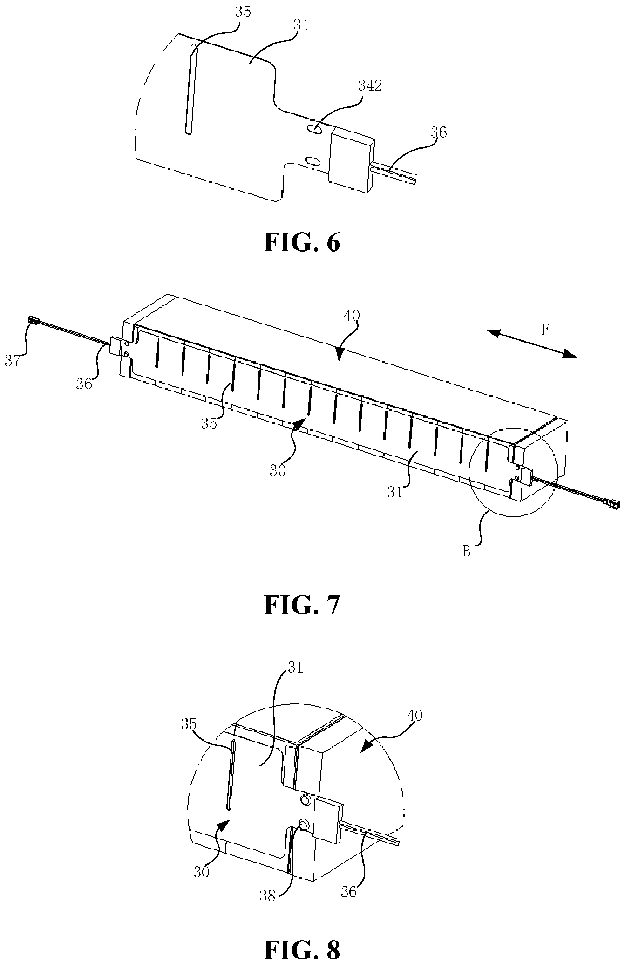

In some embodiments, please refer to Fig. 5 and Fig. 6, the mounting part 34 further includes a mounting hole 342, and the mounting hole 342 penetrates through the first insulating film 31 and the second insulating film 32 at the same time.

A connection hole corresponding to the mounting hole 342 is disposed on the heated body. During actual mounting, the heating film 30 may penetrate through the mounting hole 342 and the connection hole through a fastener 38 to achieve a fixed connection between the heating film 30 and the heated body. The fastener 38 may be a screw, a bolt, a rivet, a pin, a bolt, etc., and is not specifically limited.

At this time, the mounting part 34 includes a mounting hole 342, the heating film 30 may be fixedly connected to the heated body through the fastener 38, which may prevent the heating film 30 from detaching from the heated body due to thermal expansion and contraction, and the connection between the heating film 30 and the heated body is reliable.

In some embodiments, please refer to Fig. 5 and Fig. 6, the mounting hole 342 is arranged at an edge position of the heating film 30. Generally, the heating element 33 is arranged in a middle part of the heating film 30, the mounting hole 342 is arranged at the edge position of the heating film 30 at this time, so as to avoid damage to the heating element 33. At the same time, usually the middle position of the heating film 30 corresponds to a middle position of a battery cell 20 or a battery module composed of a plurality of battery cells 20. If the heating film 30 is fastened to the battery cell 20 or the battery module here, it is prone to causing damage to the battery cell 20 or the battery module.

In some embodiments, please refer to Fig. 5 to Fig. 7, at least one of the first insulating film 31 and the second insulating film 32 is configured with a stress relief groove 35, and the stress relief groove 35 is recessed in the thickness direction.

The stress relief groove 35 on the first insulating film 31 may be disposed through or not, and the stress relief groove 35 on the second insulating film 32 may be disposed through or not. A cross-section of the stress relief groove 35 may be circular, strip-shaped, square, etc., which is not specifically limited.

When the heating element 33 generates heat or stops heating, the first insulating film 31 and the second insulating film 32 gradually expand or contract, and the setting of the stress relief groove 35 can release the stress generated during the expansion or contraction of the first insulating film 31 and the second insulating film 32, so as to avoid damage to the first insulating film 31 and the second insulating film 32.

In some embodiments, please refer to Fig. 5 and Fig. 7, a plurality of stress relief grooves 35 are arranged on the first insulating film 31 and/or the second insulating film 32, and all the stress relief grooves 35 are arranged at intervals.

The plurality of stress relief grooves 35 on the first insulating film 31 are arranged at intervals, and the plurality of stress relief grooves 35 on the second insulating film 32 are arranged at intervals. The direction of interval arrangement may be in the same direction or in different directions, which is not limited here.

The plurality of stress relief grooves 35 are disposed on the first insulating film 31 and the second insulating film 32, which may release the stress generated in the first insulating film 31 and the second insulating film 32, and the structures of the first insulating film 31 and the second insulating film 32 are more stable.

In some embodiments, please refer to Fig. 5 and Fig. 7, the first insulating film 31 and the second insulating film 32 both extend in a preset direction F, and the preset direction F is perpendicular to the thickness direction. At this time, the heating film 30 is strip-shaped, which can cover a long area and realize simultaneous heating of a plurality of battery cells 20.

In some embodiments, please refer to Fig. 5 and Fig. 7, the heating film 30 further includes a wire 36 and a connection terminal 37, the wire 36 is electrically connected to the heating element 33, partially extends beyond a range of the first insulating film 31 and the second insulating film 32, and is electrically connected to the connection terminal 37. The connection terminal 37 electrically connects the heating element 33 to a high-voltage end of the battery module through a low-voltage wiring harness of the battery module, so as to supply power to the heating element 33. That is to say, the wire 36 and the connection terminal 37 realize the connection between the heating element 33 and the power supply component.

In a specific embodiment of the present application, please refer to Fig. 4 to Fig. 7, the heating film 30 includes a first insulating film 31, a second insulating film 32, and a heating element 33, the heating element 33 is disposed between the first insulating film 31 and the second insulating film 32, and both the first insulating film 31 and the second insulating film 32 are ceramic insulating films. One side of the second insulating film 32 facing away from the first insulating film 31 is provided with a back gum layer 341. The heating film 30 further includes a mounting hole 342 penetrating through the first insulating film 31 and the second insulating film 32. The heating film 30 is mounted by itself through the back gum layer 341 and the mounting hole 342.

In another aspect, the present application further provides a battery module, the battery module includes a frame (not shown), a plurality of battery cells 20 disposed in the frame and the heating film 30 in the above embodiment, and the heating film 30 is mounted on the frame. The battery cells 20 may be connected in series or parallel or in a parallel-series connection. The battery cells 20 are connected together to form a high-voltage output port. The battery module also includes a low-voltage wiring harness, which is electrically connected to the high-voltage output port and the heating film 30, and supplies power to the heating film 30.

The battery module is heated by adopting the above heating film 30. Because the heating film 30 has high heating efficiency, the battery module may quickly heat up in a low-temperature environment, and its low-temperature performance is good.

In another aspect, some embodiments of the present application further provide a battery 100, including a battery cell 20 and the heating film 30 in the above embodiment, and the heating film 30 is used to heat the battery cell 20.

A plurality of battery cells 20 may be connected in series or parallel or in a parallel-series connection to form a battery structure without a module, and at this time, the heating film 30 may be in direct contact with the battery cells 20. A plurality of battery cells 20 may also be connected in series or parallel or in a parallel-series connection and then accommodated in a frame to form a battery module, so as to form a battery structure with a module. At this time, the heating film 30 is mounted on the frame, and the battery cells 20 are heated through the frame.

The above battery 100 includes the heating film 30 in the above embodiment, through the high-efficiency heating of the heating film 30, it can quickly heat up at low temperature, and its low-temperature performance is good.

In another aspect, some embodiments of the present application further provide an electrical apparatus, including the above battery 100, and the battery 100 is used to provide electric energy. It includes all the beneficial effects mentioned above, and will not be repeated here.

The various technical features of the above embodiments may be combined arbitrarily. To make the description concise, all possible combinations of each technical feature in the above embodiments have not been described. However, as long as there is no contradiction in the combinations of these technical features, they should be considered within the scope of this specification.

The above embodiments only express several implementations of the present application, the descriptions thereof are relatively specific and detailed, but are not to be understood as limitations to the scope of the present application. It should be noted that those ordinarily skilled in the art may further make variations and improvements without departing from the concept of the present application, all of which fall within the protection scope of the present application. Therefore, the patent protection scope of the present application should be subject to the appended claims.

## Claims

1. A heating film, comprising:
a first insulating film;
a second insulating film, located on one side of the first insulating film in its thickness direction; and
a heating element, disposed between the first insulating film and the second insulating film;
wherein at least one of the first insulating film and the second insulating film comprises a ceramic insulating film; and the heating film is further configured with a mounting part for mounting the heating film.

2. The heating film according to claim 1, wherein the ceramic insulating film comprises at least one of an aluminum nitride ceramic film, a zinc oxide ceramic film, and a boron nitride ceramic film.

3. The heating film according to any one of claims 1 to 2, wherein both the first insulating film and the second insulating film are the same ceramic insulating film.

4. The heating film according to any one of claims 1 to 3, wherein one side of the second insulating film facing away from the first insulating film in the thickness direction is a mounting side; and
the mounting part comprises a back gum layer, and the back gum layer is disposed on the mounting side in a covering mode.

5. The heating film according to any one of claims 1 to 4, wherein the mounting part further includes a mounting hole, and the mounting hole penetrates through the first insulating film and the second insulating film at the same time.

6. The heating film according to claim 5, wherein the mounting hole is arranged at an edge position of the heating film.

7. The heating film according to any one of claims 1 to 6, wherein at least one of the first insulating film and the second insulating film is configured with a stress relief groove, and the stress relief groove is recessed in the thickness direction.

8. The heating film according to claim 7, wherein a plurality of stress relief grooves are arranged on the first insulating film and/or the second insulating film, and all the stress relief grooves are arranged at intervals.

9. The heating film according to any one of claims 1 to 8, wherein the first insulating film and the second insulating film both extend in a preset direction, and the preset direction is perpendicular to the thickness direction.

10. The heating film according to any one of claims 1 to 9, wherein the heating film further comprises a wire and a connection terminal, the wire is electrically connected to the heating element, partially extends beyond a range of the first insulating film and the second insulating film, and is electrically connected to the connection terminal.

11. A battery module, comprising a frame, a battery cell disposed in the frame, and the heating film according to any one of claims 1 to 10, wherein the heating film is mounted outside the frame.

12. A battery, comprising a battery cell and the heating film according to any one of claims 1 to 10, wherein the heating film is used to heat the battery cell.

13. An electrical apparatus, comprising the battery according to claim 12, wherein the battery is used to provide electric energy.
